# EUROPÄISCHE PATENTSCHRIFT

(11) **EP 0 826 980 B1**
(45) Veröffentlichungstag und Bekanntmachung des Hinweises auf die Patenterteilung: **25.02.2004**
(21) Anmeldenummer: 97113421.8
(22) Anmeldetag: 04.08.1997
(51) Int. Cl.: G01S 5/14, G01S 1/02

(54) **DGPS-Ortungssystem**
DGPS position determination system
Système de localisation DGPS

(30) Priorität: 27.08.1996 DE 19634529
(43) Veröffentlichungstag der Anmeldung: 04.03.1998
(73) Patentinhaber: Rohde & Schwarz GmbH & Co. KG, D-81671 München (DE)
(72) Erfinder: Springer, Rolf, Dr. Dipl.-Ing., 81669 München (DE)
(74) Vertreter: Körfer, Thomas, Dipl.-Phys.

(56) Entgegenhaltungen:
- US-A- 5 323 322
- US-A- 5 436 632
- MORGAN-OWEN G J ET AL: "DIFFERENTIAL GPS POSITIONING" ELECTRONICS AND COMMUNICATION ENGINEERING JOURNAL, Bd. 7, Nr. 1, 1. Februar 1995, Seiten 11-22, XP000500767

## Beschreibung

Die Erfindung betrifft ein DGPS-Ortungssystem laut Oberbegriff des Hauptanspruches.

DGPS (Differential-Global-Positioning-System)-Ortungssysteme dieser Art sind bekannt (beispielsweise nach RTCM 104). Sie werden zwischenzeitlich auch zur genauen Positionierung von Fahrzeugen aller Art benutzt, beispielsweise in einem Hafen zur Ortung von Container-Versetzfahrzeugen. Für solche Anwendungen werden vom Betreiber Genauigkeiten von kleiner 1 m gefordert. Eine solche Genauigkeit ist nur mit einer eigenen Referenzstation zur Korrektur der Satelliten-Rohdaten des GPS-Systems möglich und kann nur bei ständiger Systemverfügbarkeit und ununterbrochener Funktionsfähigkeit dieser eigenen Referenzstation gewährleistet werden.

Es ist daher Aufgabe der Erfindung, ein DGPS-Ortungssystem zu schaffen, bei dem die eigene Referenzstation ununterbrochen die genauen Korrekturdaten an die GPS-Nutzer wie Fahrzeuge oder Schiffe liefert. Ein System gemäβ dem Oberbegriff des Anspruchs 1 ist aus US 5 323 322 bekannt.

Diese Aufgabe wird ausgehend von einem DGPS-Ortungssystem laut Oberbegriff des Hauptanspruches durch dessen kennzeichnende Merkmale gelöst. Vorteilhafte Weiterbildungen ergeben sich aus den Unteransprüchen.

Beim erfindungsgemäßen System ist über die zusätzliche Reserve-Referenzstation unter allen Umständen gewährleistet, daß die für die genaue Positionierung der GPS-Nutzer erforderlichen Korrekturdaten ununterbrochen zur Verfügung stehen und keine Unterbrechung der Übersendung dieser Korrekturdaten beispielsweise durch Ausfall der Master-Referenzstation eintritt. Durch den Datenvergleich wird sichergestellt, daß jeder mögliche Ausfall des Telemetrie-Senders der Master-Referenzstation oder jede andere äußere Störung der Master-Referenzstation sofort festgestellt wird und dann automatisch auf die im Stand-By-Betrieb betriebene Reserve-Referenzstation umgeschaltet wird, so daß diese dann anstelle der Master-Referenzstation die Aussendung der Korrekturdaten an die GPS-Nutzer übernehmen kann. Unter Korrekturdaten, die von der Referenzstation über die Telemetriestrecke übertragen werden, sind entweder die Rohdaten des GPS-Empfängers zuzüglich der Koordinatendaten des Aufstellungsortes der Station oder die bereits in der Referenzstation aus diesen GPS-Rohdaten und den Koordinaten des Aufstellungsortes gewonnenen Fehlerkorrekturdaten zu verstehen.

Die Erfindung wird im folgenden anhand einer schematischen Zeichnung an einem Ausführungsbeispiel näher erläutert.

Die Fig. zeigt den Prinzipaufbau eines DGPS-Ortungssystems mit mehreren mobilen GPS-Nutzern 1 (von denen der Übersichtlichkeit halber nur einer dargestellt ist) und einer Master-Referenzstation 2. Die über den GPS-Empfänger 3 der Master-Referenzstation von mehreren Satelliten empfangenen Positionsdaten werden in einem Prozessor 4 mit den geodätisch genau bekannten Referenzkoordinaten des Aufstellungsortes der Master-Referenzstation verglichen und als Korrekturdaten über den Sender eines Telemetrie-Transceivers 5 zum Prozessor des mobilen GPS-Nutzers 1 übertragen. Die Eingabe der Referenzkoordinaten des Aufstellungsortes werden dem Prozessor 4 über einen Standortschalter 6 aus einem Speicher eingelesen, in dem die verschiedenen Positionen für die Master- und Reserve-Referenzstation abgespeichert sind. Im Prozessor des GPS-Nutzers 1 werden die vom GPS-Empfänger 7 des Nutzers empfangenen Ortungsdaten mit den über die Telemetrieverbindung 8 empfangenen Korrekturdaten der Master-Referenzstation korrigiert und dann über eine Anzeigeeinrichtung dem Nutzer angezeigt.

Neben dieser Master-Referenzstation 2 ist eine identisch wie diese aufgebaute Reserve-Referenzstation 12 vorgesehen, die im Stand-By-Betrieb arbeitet und die identisch wie die Master-Referenzstation einen GPS-Empfänge 13, einen Telemetrie-Transceiver 15, einen Prozessor 14 und einen Standort-Schalter 16 aufweist. Die Reserve-Referenzstation 12 ist über eine Datenleitung 20 mit der Master-Referenzstation 2 verbunden.

Im Normalbetrieb werden die in der Master-Referenzstation erzeugten Korrekturdaten über den Sender des Transceivers 5 wie oben beschrieben zum GPS-Nutzer 1 übertragen und dort ausgewertet.

Anstelle der Erzeugung der Korrekturdaten in der Master- bzw. Reserve-Referenzstation aus den GPS-Rohdaten und der geodätischen Referenzkoordinaten des Aufstellungsortes kann diese Korrektur auch unmittelbar im jeweiligen GPS-Nutzer 1 durchgeführt werden, in diesem Fall werden die Rohdaten des GPS-Empfängers 3 bzw. 13 zusammen mit den Koordinatendaten des Aufstellungsortes über den Transceiver 5 bzw. 15 zu GPS-Nutzer 1 übertragen und dort in dessen Prozessor entsprechend ausgewertet.

Im Normalbetrieb sendet der Sender des Transceivers 5 der Master-Referenzstation die Telemetriedaten (bereits ausgewertete Korrekturdaten oder GPS-Rohdaten zusammen mit Koordinatendaten des Aufstellungsortes), die vom Nutzer 1 empfangen werden. Diese Telemetriedaten werden gleichzeitig vom Empfänger des Transceivers 15 der Reserve-Referenzstation 12 empfangen und über die Datenleitung 20 zum Prozessor 4 der Master-Referenzstation 2 übertragen. Sie werden dort mit den in der Master-Referenzstation erzeugten Telemetriedaten verglichen. Der Datenvergleich erfolgt über einen Vergleich der Länge der Datentelegramme, die Länge der Datentelegramme hängt von der Anzahl der Satelliten ab, die vom GPS-Empfänger 3 empfangen werden. Durch diesen Datenvergleich im Prozessor 4 kann somit ein Fehler in der Telemetrie-Übertragungsstrecke festgestellt werden, beispielsweise ein Ausfall des Senders des Transceivers 5. Wenn bei diesem Vergleich ein Datenunterschied, also ein Unterschied in der Datentelegrammlänge festgestellt wird, so wird automatisch der Sender des Transceivers 5 in der Master-Referenzstation abgeschaltet und dafür der Sender des Transceivers 15 der Reserve-Referenzstation aktiviert, dies geschieht wieder über die Datenleitung 20. Damit werden dann die Telemetriedaten von der Reserve-Referenzstation 12, die über deren GPS-Empfänger 13 und dem jeweiligen Aufstellungsort erzeugt werden, abgestrahlt und vom GPS-Nutzer 1 ausgewertet. Die beiden Stationen 2 und 12 können entweder unmittelbar nebeneinander am gleichen Ort oder auch räumlich getrennt voneinander aufgestellt sein, es ist nur erforderlich, über den Standort-Schalter 6 bzw. 16 die jeweils gültige Position in den Prozessor 4 bzw. 14 einzugeben.

Im Prozessor 4 bzw. 14 werden gleichzeitig auch die Daten und zwar wiederum die Datentelegrammlänge der GPS-Empfänger 3 bzw. 13 überwacht. Wenn in der Master-Referenzstation festgestellt wird, daß die Länge der über den GPS-Empfänger 3 empfangenen Rohdatenmenge eine gewisse Datentelegrammlänge infolge des Empfangs von nur noch wenigen Satelliten unterschreitet, so wird über den Prozessor 4 wieder automatisch über die Datenleitung 20 die Reserve-Referenzstation 12 aktiviert, die dann anstelle der Master-Referenzstation die Aussendung der Telemetriedaten übernimmt.

Jede der identisch aufgebauten und damit problemlos austauschbaren Stationen 2 bzw. 12 ist außerdem noch mit einem Wählschalter 21 ausgestattet, mit dem festlegbar ist, ob die jeweilige Station als Master-Station oder als Reservestation betrieben wird. Zusätzlich ist noch eine Anzeigeeinrichtung 22 vorgesehen, mit der der jeweilige Status der Station (Master oder Reserve) angezeigt wird.

Reserve-Referenzstation 12 und Master-Referenzstation 2 sind außerdem noch mit einem zentralen Betriebsdatenrechner 23 verbunden, der die Systemfunktion überwacht. Dieser Rechner verhindert auch, daß bei einem Fehler in der Reserve-Referenzstation irrtümlich die an sich fehlerfreie Master-Referenzstation abgeschaltet wird.

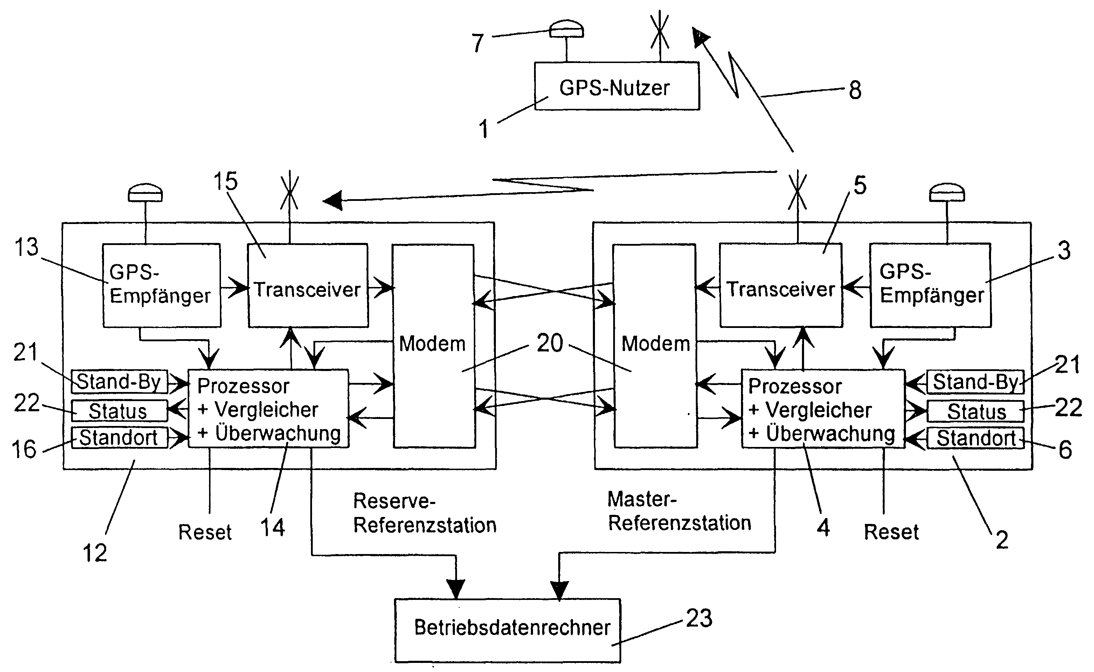

## Patentansprüche

1. DGPS-Ortungssystem mit einer Master-Referenzstation (2), die einen GPS-Empfänger (3), einen Prozessor (4) und einen Telemetriesender (5) zum Senden von Korrekturdaten zu den GPS-Nutzern (1) aufweist, wobei zusatzlich zur Master-Referenzstation (2) mindestens eine Reserve-Referenzstation (12) vorgesehen ist, die neben einem Telemetriesender einen Telemetrieempfänger (Transceiver 15) aufweist und die über eine Datenleitung (20) mit der Master-Referenzstation (2) verbunden ist, **dadurch gekennzeichnet, daß** mindestens im Prozessor der Master-Referenzstation ein Datenvergleicher vorgesehen ist, in welchem die im Empfänger (15) der Reserve-Referenzstation empfangenen Korrekturdaten mit den in der Master-Referenzstation (2) erzeugten Korrekturdaten verglichen werden und bei Feststellung eines Datenunterschiedes anstelle des Telemetriesenders (5) der Masterstation der Telemetriesender (15) der Reserve-Referenzstation zum Aussenden der Korrekturdaten aktiviert wird.

2. System nach Anspruch 1, **dadurch gekennzeichnet, daß** im Datenvergleich jeweils die Länge der Datentelegramme miteinander verglichen wird.

3. System nach Anspruch 1 oder 2, **dadurch gekennzeichnet, daß** Master-Referenzstation (2) und Reserve-Referenzstation (12) gleichartig aufgebaut sind und in beiden Stationen ein Telemetrie-Transceiver (5, 15) und ein Datenvergleicher im Prozessor (4, 14) vorgesehen ist.

4. System nach einem der vorhergehenden Ansprüche, **dadurch gekennzeichnet, daß** im Prozessor (4, 14) jeweils die Länge der Datentelegramme des GPS-Empfängers (3 bzw. 13) überwacht wird und dann, wenn in der Master-Referenzstation festgestellt wird, daß die Datentelegrammlänge des GPS-Empfängers (3) einen vorbestimmten Wert unterschreitet, automatisch die Reserve-Referenzstation (12) aktiviert wird.

5. System nach einem der vorhergehenden Ansprüche, **dadurch gekennzeichnet, daß** in beiden Stationen (2, 12) jeweils eine Vorrichtung (16) zum Eingeben der jeweiligen geodätischen Daten des Aufstellungsortes vorgesehen ist.

6. System nach einem der vorhergehenden Ansprüche, **dadurch gekennzeichnet, daß** ein Wählschalter (21) zum Programmieren der jeweiligen Station als Master-Station (2) oder Reserver-Referenzstation (12) vorgesehen ist.

## Claims

1. Differential Global Positioning System (DGPS) with a master reference station (2), which comprises a GPS receiver (3), a processor (4) and a telemetry transmitter (5) for transmitting correction data to the GPS users (1), wherein, in addition to the master reference station (2), at least one reserve reference station (12) is provided, which provides a telemetry receiver (transceiver 15) as well as a telemetry transmitter, and which is connected via a data line (20) to the master reference station (2),
**characterised in that**,
at least in the processor of the master reference station, a data comparator is provided, in which the correction data received by the receiver (15) in the reserve reference station are compared with the correction data produced in the master reference station (2), and that if a difference is determined between the data, the telemetry transmitter (15) of the reserve reference station is activated for transmission of the correction data instead of the telemetry transmitter (5) in the master station.

2. System according to claim 1,
**characterised in that**,
in the context of the data comparison, the lengths of the data telegrams in each case are compared with one another.

3. System according to claim 1 or 2,
**characterised in that**
the master reference station (2) and the reserve reference station (12) are constructed in the same manner, and that a telemetry transceiver (5,15) and a data comparator are provided in the processor (4, 14) in both stations.

4. System according to any one of the preceding claims,
**characterised in that**,
the processor (4,14) monitors the length of the data telegrams of the GPS receiver (3 and/or 13) in each case, and if it is determined in the master reference station that the length of the data telegrams in the GPS receiver (3) falls below a predetermined value, the reserve reference station (12) is automatically activated.

5. System according to any one of the preceding claims,
**characterised in that**
a device (16) for entering the relevant geodetic data for the installation site is provided in each case in both stations (2, 12).

6. System according to any one of the preceding claims,
**characterised in that**
a selection switch (21) is provided for programming the relevant station as a master station (2) or as a reserve reference station (12).

## Revendications

1. Système de localisation de GPS avec une station de référence maître (2), qui présente un récepteur de GPS (3), un processeur (4) et un émetteur à télémétrie (5) pour l'émission de données de correction aux utilisateurs de GPS (1), moyennant quoi, en supplément de la station de référence maître (2), il est prévu au moins une station de référence de réserve (12) qui présente en plus d'un émetteur à télémétrie un récepteur de télémétrie (émetteur-transmetteur combiné 15) et qui est relié par une ligne de données (20) à la station de référence maître (2), **caractérisé en ce qu'**au moins dans le processeur de la station de référence maître, il est prévu un comparateur de données dans lequel les données de correction reçues dans leur récepteur (15) de la station de référence de réserve sont comparées avec les données de correction générées à la station de référence maître (2) et l'émetteur à télémétrie (5) de la station de référence de réserve est activé en cas de constatation d'une différence de données à la place de l'émetteur à télémétrie (5) de la station maître pour l'envoi des données de correction.

2. Système selon la revendication 1, **caractérisé en ce que**, dans le cadre de la comparaison de données, à chaque fois les longueurs des télégrammes de données sont comparées entre elles.

3. Système selon la revendication 1 ou 2, **caractérisé en ce que** la station de référence maître (2) et la station de référence de réserve (12) sont conçues de façon identique et il est prévu dans les deux stations un émetteur-récepteur combiné à télémétrie (5, 15) et un comparateur de données dans le processeur (4, 14).

4. Système selon l'une quelconque des revendications précédentes, **caractérisé en ce que** respectivement la longueur des télégrammes de données du récepteur de GPS (3 ou 13) est contrôlée dans le processeur (4, 14) et dans les cas où l'on constate dans la station de référence maître que la longueur de télégramme de données du récepteur de GPS (3) est inférieure à une valeur prédéfinie, la station de référence de réserve (12) est activée automatiquement.

5. Système selon l'une quelconque des revendications précédentes, **caractérisé en ce que**, dans les deux stations (2, 12), respectivement un dispositif (16) est prévu pour l'entrée des données géodésiques respectives du lieu d'installation.

6. Système selon l'une quelconque des revendications précédentes, **caractérisé en ce qu'**un sélecteur (21) est prévu pour la programmation de la station concernée comme station maître (2) ou station de référence de réserve (12).
